# EUROPEAN PATENT SPECIFICATION

(11) **EP 4 564 791 B1**
(45) Date of publication and mention of the grant of the patent: **02.09.2026**
(21) Application number: 24210903.1
(22) Date of filing: 05.11.2024
(51) Int. Cl.: H04M 1/02, H01M 50/271

(54) **LATCH OF A BATTERY COVER FOR AN ELECTRONIC DEVICE**
VERRIEGELUNG EINER BATTERIEABDECKUNG FÜR EIN ELEKTRONISCHES GERÄT
VERROUILLAGE D'UN COUVERCLE DE BATTERIE POUR UN APPAREIL ÉLECTRONIQUE

(30) Priority: 30.11.2023 JP 2023202708
(43) Date of publication of application: 04.06.2025
(73) Proprietor: CASIO COMPUTER CO., LTD., Tokyo 151-8543 (JP)
(72) Inventor: Eguchi, Hiroki, 205-8555 Hamura-shi, Tokyo (JP); Yuki, Koji, 205-8555 Hamura-shi, Tokyo (JP); Tozuka, Takumi, 205-8555 Hamura-shi, Tokyo (JP)
(74) Representative: Grünecker Patent- und Rechtsanwälte PartG mbB

(56) References cited:
- GB-A- 2 352 003
- KR-A- 20060 074 294
- US-A1- 2009 243 910

## Description

### TECHNICAL FIELD

The present invention relates to a cover piece detachably attached to an opening of a casing and an electronic device.

### DESCRIPTION OF RELATED ART

Known battery-driven electronic devices have a detachable cover for covering the opening of the battery compartment of the casing. For example, according to US 2009/243910 A1, a battery-operated remote controller has a casing with an arc-shaped recessed battery holder, which is closed by a plate-like lid provided with a generally U-shaped latch-hook. Protrusions on the latch-hook engage latch-pawls on the casing to lock the lid, while downward arc-shaped dents around the latch-hook form a fingertip recess so that, by twisting the latch-hook with two fingers, the lid can be opened for battery replacement. Furthermore, according to JP S57 75478 U, a cover for covering the battery compartment has (i) an engagement projection to engage with the opening of the casing at one end and (ii) a U-shaped elastic piece (plate spring), a protrusion to engage with the opening, and a groove at the other end. With the protrusion and the groove, the cover is detachably engaged with the opening of the casing.

To secure the capacity of the battery compartment, the region of the elastic piece needs to be as compact as possible. However, if the region of elastic piece is made compact, the movable range of a finger-putting part is made narrow, on which a finger is put to deform the elastic piece to detach the battery cover. According to such a structure, the battery cover may not be easily disengaged even if the finger-putting part is sufficiently moved.

An object of the present invention is to ensure the capacity of the opening of the casing as well as to ensure disengagement of the cover.

### SUMMARY OF THE INVENTION

To solve the above problem, according to the present invention, there is provided a cover piece for covering an opening of a casing by being engaged with an engaging target part formed on the opening, the cover piece comprising an elastic member, wherein a first region, a second region, and a U-shaped connecting region that connects the first region and the second region are integrally formed with the elastic member as one body, the first region including an engaging part and a finger-putting part, and the second region being formed at a position to face the first region, the engaging part engaged with the engaging target part is disengaged from the engaging target part in response to the finger-putting part being moved in a direction of bringing the first region toward the second region, at least either an edge of a corner region of the first region facing the second region or an edge of a corner region of the second region facing the first region is removed, and on the corner region opposite the other corner region the edge of which is removed, a relief shape is formed at a relief angle, the relief angle corresponding to an angle at which the first region is in contact with the second region in response to the finger-putting part being moved in the direction of bringing the first region toward the second region.

### Advantageous Effects of Invention

According to the present invention, the capacity of the opening of the casing can be secured, and disengagement of the cover can be ensured.

### BRIEF DESCRIPTION OF DRAWINGS

The accompanying drawings are not intended as a definition of the limits of the invention but illustrate embodiments of the invention, and together with the general description given above and the detailed description of the embodiments given below, serve to explain the principles of the invention, wherein:
FIG.1 is a plan view of the back surface of a scientific calculator as an embodiment of an electronic device to which the present invention is applied;
FIG.2 is a perspective view of the lower part of the back surface of the scientific calculator;
FIG.3 is a plan view of the cover viewed from the front;
FIG.4 is an enlarged lateral view of a part of the cover including a hook;
FIG.5 is a cross-sectional view along the A-A line in FIG.1;
FIG.6A is an enlarged view of the area enclosed by the single-dotted line in FIG.5;
FIG.6B shows a state where a finger-putting part is moved in a direction of bringing a manipulation part closer to a base part from the state shown in FIG.6A;
FIG.7 shows a state where an engaging part is engaged with an engaging target part; and
FIG.8 is a cross-sectional view along the A-A line in FIG.1 in a state the opening is uncovered.

### DETAILED DESCRIPTION

Hereinafter, an embodiment of a cover piece of the present invention is described with reference to the figures. In the following embodiment, a scientific calculator is used as an example of an electronic device to which the present invention is applied. However, the electronic device is not limited to a scientific calculator. The present invention is applicable to any electronic device (e.g., an electronic dictionary or a tablet terminal) that is provided with a cover 20 configured to cover an opening 11 of a casing 10, which are described later.

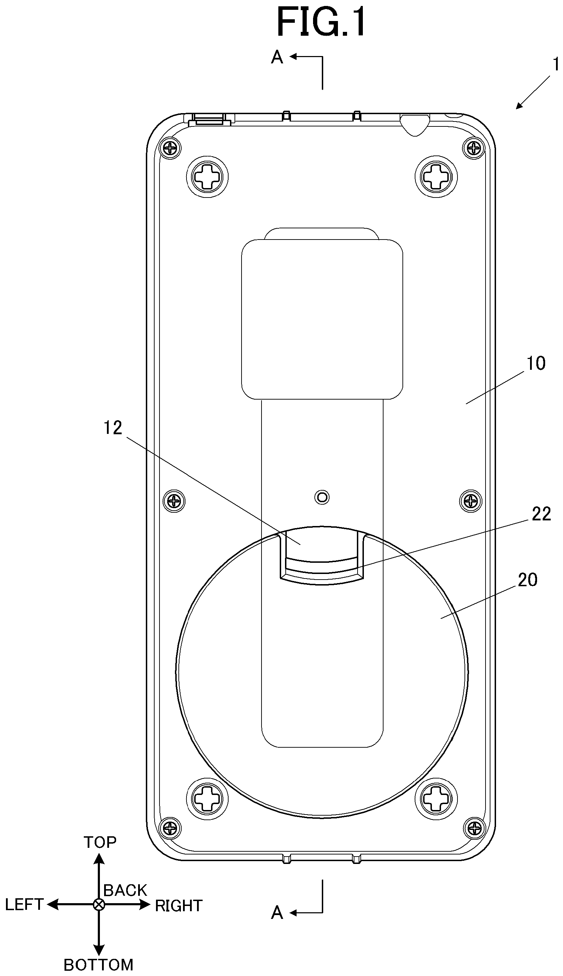

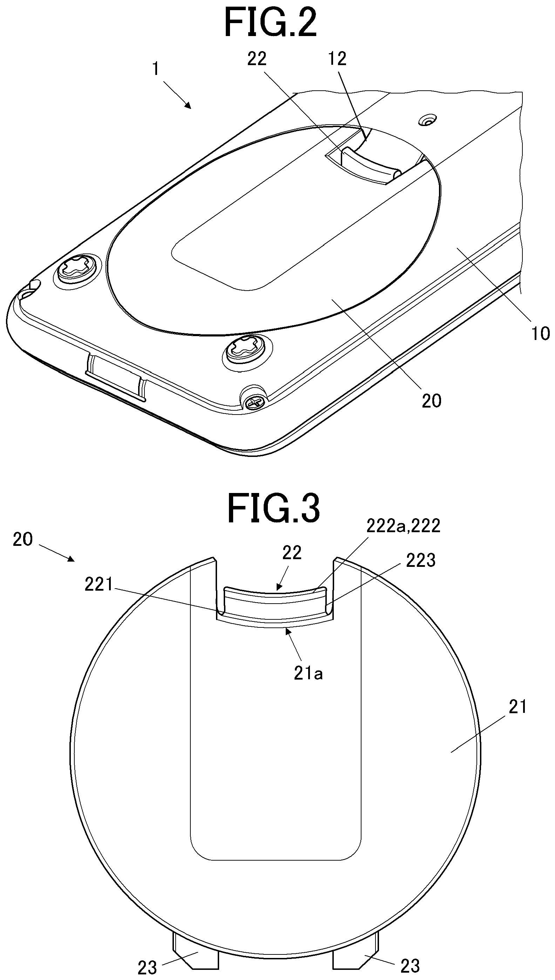

As shown in FIG.1 and FIG.2, the scientific calculator 1 includes a casing 10 and a cover (cover body) 20. FIG. 1 shows the top-bottom direction, the left-right direction, and the front-back direction that are perpendicular to each other. The front-back direction corresponds to the thickness direction of the casing 10.

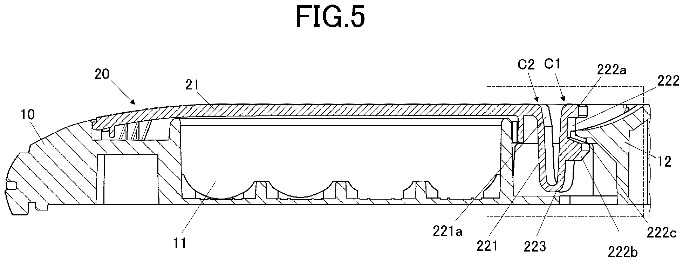

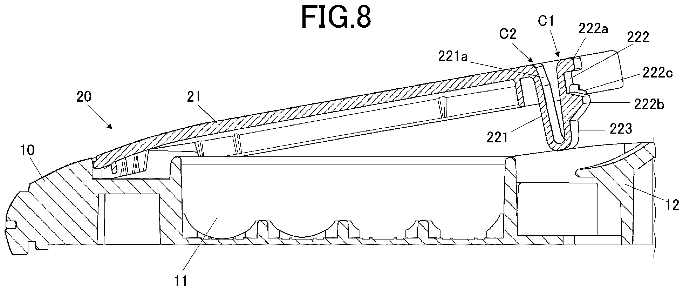

On the back of the casing 10, an opening 11 is formed to house (load) not-illustrated four dry cell batteries or not-illustrated dry-cell-type secondary batteries (see FIG.5 and FIG.8).

The opening 11 has a round shape corresponding to the external round shape of the cover 20 (see FIG.3). By attaching the cover 20, the opening 11 is covered.

As shown in FIG.1 and FIG.5, an engaging target part (engaging target region) 12 is provided at a specific position of the opening 11 corresponding to a hook 22 (described later) of the cover 20. The engaging target part 12 is engaged with the hook 22 when the cover 20 is attached.

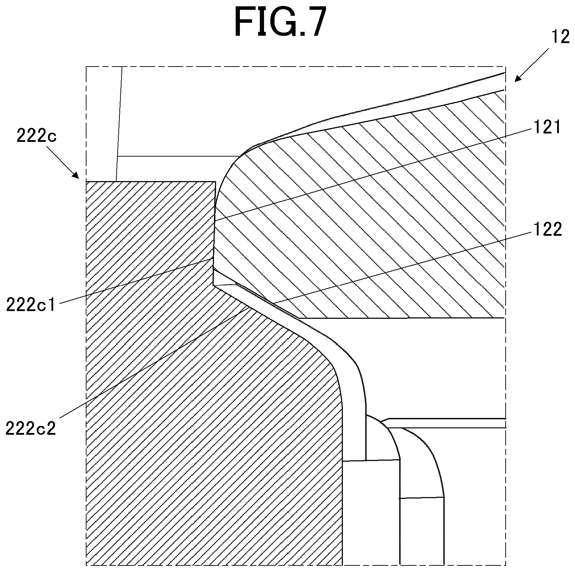

The engaging target part 12 is formed like an eave that projects from the edge of the opening 11 toward the center of the opening 11 while sloping downward. As shown in FIG.7, the engaging target part 12 includes an engaging target surface 121. The engaging target surface 121 is formed to be engaged with an engaging surface 222c1 of each rib 222c formed on the hook 22. The ribs 222c are described later. The engaging target part 12 has a sloping surface 122 (first surface) adjacent to the engaging target surface 121. When the engaging target surface 121 is engaged with the engaging surface 222c1 of each rib 222c (described later), namely when the cover 20 is attached to the casing 10, the sloping surface 122 faces the sloping surfaces 222c2 (second surface) of the ribs 222c with a predetermined distance from the sloping surfaces 222c2. The predetermined distance is determined so as to prevent rattling, which is caused by an impact on the cover 20 or the casing 10. Thus, rattling caused by an impact on the cover 20 or the casing 10 can be appropriately prevented.

At predetermined positions of the opening 11 (the positions corresponding to locking parts 23 of the cover 20, which are described later), locking holes are formed although not illustrated. The locking parts 23 are locked (inserted) to the locking holes when the cover 20 is attached.

As shown in FIG.3, the cover 20 includes a cover body 21, the hook 22 (elastic member), and the locking parts 23.

The cover body 21 is for covering the opening 11 of the casing 10. The cover body 21 has a round shape (disk shape) corresponding to the round-shaped opening 11. Part of the cover body 21 corresponding to the engaging target part 12 of the casing 10 is notched. The hook 22 is formed at the inner end 21a of the notch.

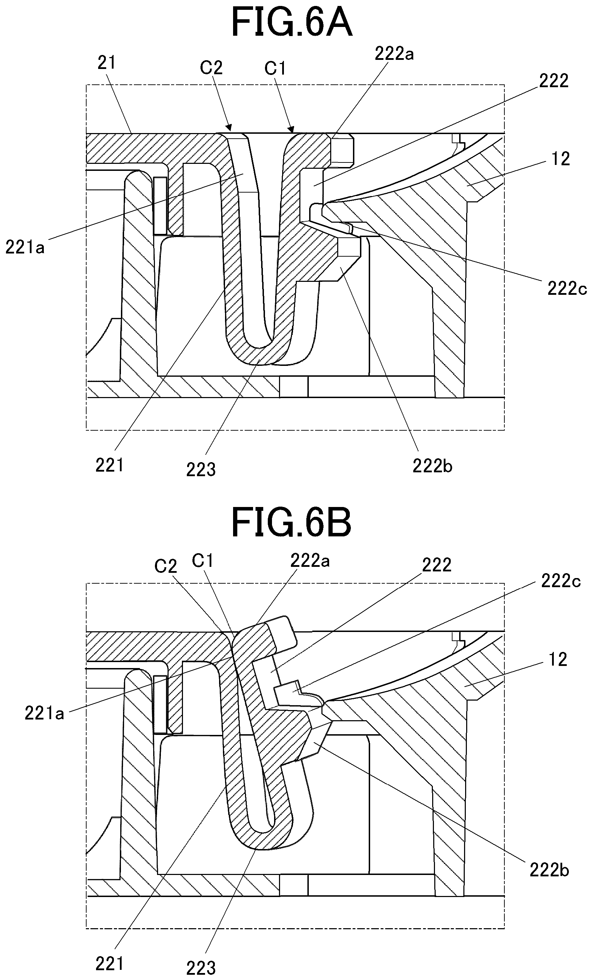

The hook 22 is formed to engage the cover 20 with the casing 10. Specifically, as shown in FIG.3 and FIG.6A, the hook 22 is a plate spring hook and includes a base part 221 (second region), a manipulation part 222 (first region), and a connecting part 223. The base part 221 protrudes substantially in the thickness direction of the casing 10 from the back surface side of the end 21a of the cover body 21. The direction in which the base part 221 protrudes may not be identical to the thickness direction. The back surface side of the cover 20 is the side that faces the casing 10 when the cover 20 is attached to the casing 10. The manipulation part 222 is formed to face the base part 221. The connecting part 223 connects the base part 221 and the manipulation part 222. When the cover 20 is attached to the casing 10, the hook 22 is biased toward the engaging target part 12. The hook 22 is not limited to a plate spring hook as long as the hook 22 is biased toward the engaging target part 12 when the cover 20 is attached to the casing 10. The hook 22 may be a hook using other biasing means, such as a coil spring or a rubber.

The manipulation part 222 includes a finger-putting part (finger-putting region) 222a. In removing the cover 20 from the casing 10, the finger-putting part 222a is moved in the direction of loosening the engagement between the casing 10 and the cover 20 (in the direction from top to bottom in FIG.1).

The finger-putting part 222a has a hook shape and is formed at the free end of the manipulation part 222 opposite the end connected to the connecting part 223. As shown in FIG.3, the finger-putting part 222a has a curved shape that is depressed in the direction of loosening the engagement between the casing 10 and the cover 20 (in the direction from top to bottom in FIG.1). That is, the finger-putting part 222a is depressed in the direction opposite the arc-shaped depression of the part of the opening 11 corresponding to the finger-putting part 222a, the part of the opening 11 being provided with the engaging target part 12. The finger-putting part 222a is formed not to protrude from the outer surface of the casing 10 when the cover 20 covers the casing 10. As shown in FIG.6A, the finger-putting part 222a has a crook-shaped corner C1. The corner C1 is rounded (the sharp edge of the corner C1 is removed).

The manipulation part 222 has an engaging part (engaging region) 222b between one end connected to the connecting part 223 and the other end having the finger-putting part 222a. The engaging part 222b is formed to be engaged with the engaging target part 12 formed on the casing 10. As shown in FIG.5 and FIG.6A, the upper surface of the engaging part 222b slopes downward toward the engaging target part 12. On the upper surface of the engaging part 222b, ribs 222c are formed.

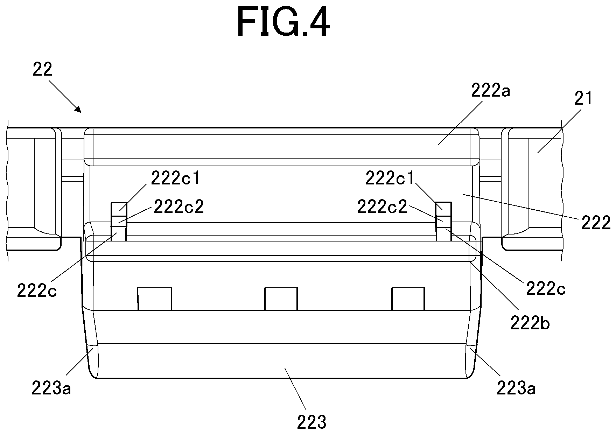

As shown in FIG.4, two ribs 222c are provided at a predetermined distance from each other in the width direction of the engaging part 222b. As shown in FIG.4 and FIG.7, each rib 222c has an engaging surface 222c1 and a sloping surface 222c2 adjacent to the lower end of the engaging surface 222c1.

As shown in FIG.7, the engaging surface 222c1 is formed to be engaged with the engaging target surface 121 of the engaging target part 12 of the casing 10. When the engaging surface 222c1 is engaged with the engaging target surface 121, namely when the cover 20 is attached to the casing 10, the manipulation part 222 is pushed toward the base part 221 by the engaging target part 12. That is, when the cover 20 is attached to the casing 10, the manipulation part 222 (hook 22) is biased toward the engaging target part 12. In the state where the engaging surfaces 222c1 of the ribs 222c are engaged with the engaging target surface 121 of the engaging target part 12, the ribs 222c prevent rattling and serve to determine the position of the cover 20 in the height direction (the thickness direction of the casing 10).

The sloping surface 222c2 slopes downward toward the engaging target part 12, as shown in FIG.7. When the engaging surfaces 222c1 are engaged with the engaging target surface 121, namely when the cover 20 is attached to the casing 10, the sloping surfaces 222c2 face the sloping surface 122 of the engaging target part 12 with a predetermined distance from the sloping surface 122.

The connecting part 223 connects the base part 221 and the manipulation part 222, as described above. As shown in FIG.6A, the connecting part 223 is U-shaped when viewed from the lateral side. The manipulation part 222, which includes the engaging part 222b, is swingable in the direction of separating from the engaging target part 12 (toward the base part 221) or in the direction toward the engaging target part 12 (separating from the base part 221) on the lowest end of the connecting part 223 as the center. The axis is the center of the connecting part 223 in the width direction of the connecting part 223. In this embodiment, the base part 221, the manipulation part 222, the engaging part 222b, and the connecting part 223 of the hook 22 have the curved shape depressed in the direction of loosening the engagement between the casing 10 and the cover 20 so as to correspond to the curved shape of the finger-putting part 222a (see FIG.3). When the finger-putting part 222a is moved in the direction of loosening the engagement between the casing 10 and the cover 20 to detach the cover 20 from the casing 10, stress tends to concentrate on both ends of the connecting part 223 in the width direction. To deal with the stress, as shown in FIG.4, chamfered parts 223a are formed on both ends of the connecting part 223 in the width direction. That is, both ends of the connecting part 223 in the width direction (in the left-right direction in FIG.1) are cut off. This reduces the concentration of stress on both ends of the connecting part 223 in the width direction.

The base part 221 protrudes from the back surface side of the inner end 21a of the cover body 21, as described above. As shown in FIG.5 and FIG.6A, the base part 221 has a chamfered part 221a at an L-shaped corner C2, which is formed by the base part 221 and the cover body 21. The chamfered part 221a is formed at a part of the base part 221 that abuts the corner C1 of the finger-putting part 222a when the finger-putting part 222a is moved in the direction of loosening the engagement between the casing 10 and the cover 20. The chamfered part 221a is formed at an angle (relief angle) corresponding to the leaning angle of the manipulation part 222 when the finger-putting part 222a abuts the base part 221. In other words, in the region (corner C2) of the base part 221 opposite the corner C1 of the finger-putting part 222a of the manipulation part 222, the chamfered part 221a is formed with a relief shape at a relief angle. The relief angle corresponds to the angle of the manipulation part 222 in contact with (abutting) the base part 221 when the finger-putting part 222a is moved in the direction of bringing the manipulation part 222 toward the base part 221. FIG.6B shows the state where the finger-putting part 222a is moved from the state of FIG.6A in the direction of bringing the manipulation part 222 toward the base part 221. The chamfered part 221a is at a position where the manipulation part 222 abuts the base part 221, and the chamfered part 221a is at an angle corresponding to the leaning angle of the manipulation part 222 abutting the base part 221. In this embodiment, the corner C1 of the finger-putting part 222a is rounded, and the chamfered part 221a is formed on the base part 221. Such a structure increases the stroke amount (moving amount) of the finger-putting part 222a even if there is not enough moving distance. Thus, the engagement between the casing 10 and the cover 20 is certainly released when the finger-putting part 222a is moved in the direction of loosening the engagement between the casing 10 and the cover 20. Herein, the rounded corner may be formed on the corner C2, and the chamfered part 221a may be formed on the manipulation part 222.

The locking parts 23 are inserted into the not-illustrated locking holes formed in the opening 11, thereby being engaged with the locking holes. Two locking parts 23 are formed on the edge of the cover body 21. Specifically, the locking parts 23 are formed on the edge of the cover body 21 such that the locking parts 23 and the hook 22 form an isosceles triangle.

The cover 20 is supported by the hook 22 and the two locking parts 23. The cover body 21, the hook 22, and the locking parts 23 are formed as one body.

In the structure described above, dry cell batteries or dry-cell-type secondary batteries are housed in a predetermined position in the opening 11, and the locking parts 23 of the cover 20 are inserted into the not-illustrated locking holes of the opening 11. In the state shown in FIG.8, by pressing the cover 20 from above, the cover body 21 of the cover 20 is fitted into the opening 11; and the hook 22 of the cover 20 bends inward to engage with the engaging target part 12. Thus, the cover 20 is fixed to the casing 10, as shown in FIG.5. In the state the cover 20 is fixed, by moving the finger-putting part 222a of the hook 22 in the direction of loosening the engagement between the casing 10 and the cover 20 (in the direction toward the base part 221), the engagement between the hook 22 and the engaging target part 12 is released, and the opening 11 is uncovered, as shown in FIG.8. Herein, since the ribs 222c each have the sloping surface 222c2 (see FIG.7), the corner of the engaging target part 12 formed by the engaging target surface 121 and the sloping surface 122 does not interfere with (does not contact) the engaging part 222b of the hook 22. Thus, the engagement between the casing 10 and cover 20 can be smoothly released.

As described above, according to the embodiment, the scientific calculator 1 includes the cover 20 for covering the opening 11 of the casing 10 by being engaged with the engaging target part 12 (engaging target region) formed on the opening 11. The cover 20 includes the hook 22 (elastic member). The manipulation part 222 (first region) and the base part 221 (second region)are integrally formed with the hook 22. The manipulation part 222 includes the engaging part 222b (engaging region) and the finger-putting part 222a (finger-putting region). The base part 221 is formed at a position to face the manipulation part 222. The engaging part 222b engaged with the engaging target part 12 is disengaged from the engaging target part 12 when the finger-putting part 222a is moved in a direction of bringing the manipulation part 222 toward the base part 221. At least either the edge of the corner C1 of the manipulation part 222 that faces the base part 221 or the edge of the corner C2 of the base part 221 that faces the manipulation part 222 is removed.

Thus, according to the cover 20 of the scientific calculator **1,** at least either the edge of the corner C1 of the manipulation part 222 facing the base part 221 or the edge of the corner C2 of the base part 221 facing the manipulation part 222 is removed. According to such a structure, the corner C1 of the manipulation part 222 can be prevented from contacting (abutting) the corner C2 of the base part 221 when the finger-putting part 222a is moved in the direction of loosening the engagement between the casing 10 and the cover 20. Such a structure allows the finger-putting part 222a to have a greater stroke amount (moving amount), so that the engagement between the casing 10 and the cover 20 can be certainly released when the finger-putting part 222a is moved in the direction of loosening the engagement. Further, since the finger-putting part 222a has a greater stroke amount, the area of the opening 11 corresponding to the hook 22 does not need to be widened, and the capacity of the opening 11 of the casing 10 (the capacity of the battery housing space) is easily secured.

Further, according to the cover 20 of the scientific calculator 1, on the corner C2 of the base part 221 opposite the corner C1 of the finger-putting part 222a (manipulation part 222), a relief shape (chamfered part 221a) is formed at a relief angle, the relief angle corresponding to an angle at which the manipulation part 222 is in contact with the base part 221 when the finger-putting part 222a is moved in the direction of bringing the manipulation part 222 toward the base part 221. According to such a structure, the corner C1 of the manipulation part 222 is further prevented from contacting (abutting) the corner C2 of the base part 221.

Although the embodiment of the present invention has been described in detail, the above embodiment does not limit the present invention but can be modified without departing from the scope of the present invention.

For example, although the opening 11 of the casing 10 has a round shape in the above embodiment, the opening 11 is not limited to a round shape. The opening 11 may have a rectangular or oval shape, for example. If the opening 11 is rectangular, the cover body 21 has a shape corresponding to the rectangular opening 11.

In the above embodiment, the corner C1 of the finger-putting part 222a is rounded, and the chamfered part 221a is formed on the base part 221. However, as long as the corner C1 of the finger-putting part 222a is rounded, the base part 221 may not have the chamfered part 221a, for example. For another example, as long as the base part 221 has the chamfered part 221a, the corner C1 of the finger-putting part 222a may not be rounded.

In the above embodiment, the locking parts 23 of the cover 20 are fitted into not-illustrated locking holes formed at predetermined positions of the opening 11. However, the cover 20 may be coupled to the casing 10 by a hinge that allows opening and closing of the opening 11, for example. In this case, the cover 20 is not completely detached from the casing 10.

In the above embodiment, the shape of the curved surface of the sloping surface 222c2 may be matched to the shape of the movement locus of the sloping surface 222c2 when the engaging part 222b of the lid member 10 is swung. Such a structure prevents the cover 20 from moving upward by the impact on the cover 20 or the casing 10, thereby preventing the detachment of the cover 20 from the casing 10. Such a structure also allows proper disengagement of the cover 20 from the casing 10.

## Claims

1. A cover piece (20) for covering an opening (11) of a casing (10) by being engaged with an engaging target part (12) formed on the opening (11), the cover piece (20) comprising an elastic member (22), wherein
a first region (222), a second region (221), and a U-shaped connecting region (223) that connects the first region (222) and the second region (221) are integrally formed with the elastic member (22) as one body, the first region (222) including an engaging part (222b) and a finger-putting part (222a), and the second region (221) being formed at a position to face the first region (222),
the engaging part (222b) engaged with the engaging target part (12) is disengaged from the engaging target part (12) in response to the finger-putting part (222a) being moved in a direction of bringing the first region (222) toward the second region (221), and
at least either an edge of a corner region (C1) of the first region (222) facing the second region (221) or an edge of a corner region (C2) of the second region (221) facing the first region (222) is removed,
**characterized in that**
on the corner region (C2) opposite the other corner region (C1) the edge of which is removed, a relief shape (221a) is formed at a relief angle, the relief angle corresponding to an angle at which the first region (222) is in contact with the second region (221) in response to the finger-putting part (222a) being moved in the direction of bringing the first region (222) toward the second region (221).

2. The cover piece (20) according to claim 1, wherein the cover piece (20) has a round shape greater than a battery-housing space formed in the opening (11) in which at least batteries are housed.

3. The cover piece (20) according to claim 2, wherein the elastic member (22) is formed at a notch of the round shape of the cover piece (20).

4. An electronic device (1) comprising:
the cover piece (20) according to any one of claims 1 to 3; and
the casing (10) that has the opening (11).

## Patentansprüche

1. Abdeckstück (20) zum Abdecken einer Öffnung (11) eines Gehäuses (10) durch Eingriff mit einem an der Öffnung (11) ausgebildeten Eingriffsgegenstück (12), wobei das Abdeckstück (20) ein elastisches Element (22) umfasst, wobei
ein erster Bereich (222), ein zweiter Bereich (221) und ein U-förmiger Verbindungsbereich (223), der den ersten Bereich (222) und den zweiten Bereich (221) verbindet, einstückig mit dem elastischen Element (22) als ein Körper ausgebildet sind, wobei der erste Bereich (222) einen Eingriffsabschnitt (222b) und einen Fingerauflegeabschnitt (222a) aufweist und der zweite Bereich (221) an einer Position ausgebildet ist, an der er dem ersten Bereich (222) gegenüberliegt,
der mit dem Eingriffsgegenstück (12) in Eingriff stehende Eingriffsabschnitt (222b) von dem Eingriffsgegenstück (12) außer Eingriff gebracht wird, als Reaktion darauf, dass der Fingerauflegeabschnitt (222a) in eine Richtung bewegt wird, in der der erste Bereich (222) zu dem zweiten Bereich (221) hin gebracht wird, und
zumindest entweder eine Kante eines dem zweiten Bereich (221) zugewandten Eckbereichs (C1) des ersten Bereichs (222) oder eine Kante eines dem ersten Bereich (222) zugewandten Eckbereichs (C2) des zweiten Bereichs (221) entfernt ist,
**dadurch gekennzeichnet, dass**
an dem Eckbereich (C2), der dem anderen Eckbereich (C1), dessen Kante entfernt ist, gegenüberliegt, eine Freistellungsform (221a) unter einem Freistellungswinkel ausgebildet ist, wobei der Freistellungswinkel einem Winkel entspricht, bei dem der erste Bereich (222) mit dem zweiten Bereich (221) in Kontakt steht, als Reaktion darauf, dass der Fingerauflegeabschnitt (222a) in der Richtung bewegt wird, in der der erste Bereich (222) zu dem zweiten Bereich (221) hin gebracht wird.

2. Abdeckstück (20) nach Anspruch 1, wobei das Abdeckstück (20) eine runde Form aufweist, die größer ist als ein in der Öffnung (11) ausgebildeter Batterieaufnahmeraum, in dem zumindest Batterien aufgenommen sind.

3. Abdeckstück (20) nach Anspruch 2, wobei das elastische Element (22) an einer Aussparung der runden Form des Abdeckstücks (20) ausgebildet ist.

4. Elektronisches Gerät (1), umfassend:
das Abdeckstück (20) nach einem der Ansprüche 1 bis 3; und
das Gehäuse (10), das die Öffnung (11) aufweist.

## Revendications

1. Pièce de couvercle (20) pour recouvrir une ouverture (11) d'un boîtier (10) en étant mise en prise avec une partie cible de mise en prise (12) formée sur l'ouverture (11), la pièce de couvercle (20) comprenant un élément élastique (22), dans laquelle une première région (222), une seconde région (221) et une région de liaison en forme de U (223) qui relie la première région (222) et la seconde région (221) sont formées d'un seul tenant avec l'élément élastique (22) sous la forme d'un corps unique, la première région (222) incluant une partie de mise en prise (222b) et une partie de positionnement de doigt (222a), et la seconde région (221) étant formée au niveau d'une position pour faire face à la première région (222),
la partie de mise en prise (222b) en prise avec la partie cible de mise en prise (12) est libérée de la partie cible de mise en prise (12) en réponse au déplacement de la partie de positionnement de doigt (222a) dans une direction amenant la première région (222) vers la seconde région (221), et
au moins un bord d'une région d'angle (C1) de la première région (222) faisant face à la seconde région (221) ou un bord d'une région d'angle (C2) de la seconde région (221) faisant face à la première région (222) est retiré,
**caractérisée en ce que**
sur la région d'angle (C2) opposée à l'autre région d'angle (C1) dont le bord est retiré, une forme en relief (221a) est formée au niveau d'un angle de relief, l'angle de relief correspondant à un angle auquel la première région (222) est en contact avec la seconde région (221) en réponse au déplacement de la partie de positionnement de doigt (222a) dans la direction qui amène la première région (222) vers la seconde région (221).

2. Pièce de couvercle (20) selon la revendication 1, dans laquelle la pièce de couvercle (20) présente une forme ronde supérieure à un espace de logement de batterie formé dans l'ouverture (11) dans lequel au moins des batteries sont logées.

3. Pièce de couvercle (20) selon la revendication 2, dans laquelle l'élément élastique (22) est formé au niveau d'une encoche de la forme ronde de la pièce de couvercle (20).

4. Dispositif électronique (1), comprenant :
la pièce de couvercle (20) selon l'une quelconque des revendications 1 à 3 ; et
le boîtier (10) qui présente l'ouverture (11).
